# EUROPEAN PATENT SPECIFICATION

(11) **EP 4 203 277 B1**
(45) Date of publication and mention of the grant of the patent: **20.05.2026**
(21) Application number: 21217473.4
(22) Date of filing: 23.12.2021
(51) Int. Cl.: H02K 13/02, H02K 15/12, H02K 3/52, H02K 13/00

(54) **ELECTRICAL CONNECTOR FOR A SEPARATELY EXCITED ROTOR**
ELEKTRISCHER VERBINDER FÜR EINEN FREMDERREGTEN ROTOR
CONNECTEUR ÉLECTRIQUE POUR UN ROTOR EXCITÉ SÉPARÉMENT

(43) Date of publication of application: 28.06.2023
(73) Proprietor: Valeo eAutomotive Germany GmbH, 91056 Erlangen (DE)
(72) Inventor: Wolf, Nico, 97616 Bad Neustadt a.d.Saale (DE); Wieczorek, Christoph, 97616 Bad Neustadt a.d.Saale (DE); Siepker, Carsten, 97616 Bad Neustadt a.d.Saale (DE); Bach, Regina, 97616 Bad Neustadt a.d.Saale (DE); Finger-Albert, Christian, 97616 Bad Neustadt a.d.Saale (DE); Menz, Michael, 97616 Bad Neustadt a.d.Saale (DE); Förtsch, Steffen, 97616 Bad Neustadt a.d.Saale (DE)
(74) Representative: Valeo Powertrain Systems

(56) References cited:
- EP-A1- 3 176 921
- DD-A1- 52 714
- DE-A1- 3 248 219
- US-A1- 2017 163 120
- US-A1- 2017 163 121

## Description

### FIELD OF THE INVENTION

The present invention belongs to the field of rotary electric machines configured to be on board of an automotive vehicle, such as an electric vehicle (EV) or a hybrid vehicle (HV).

The present invention relates in particular to the field of separately excited rotors, also called wound rotors or slip ring rotors, integrated to rotary electric machines.

### BACKGROUND OF THE INVENTION

As is known, an electric or a hybrid automotive vehicle presents an electric drive comprising a rotary electric machine which need to be supplied with electric power, for instance by a high voltage power supply battery, to deliver a mechanical power in order to ensure the propulsion of the vehicle.

In a general manner, the rotary electric machine comprises a stator, referring to a fixed part of the rotary electric machine, and a rotor, referring to a rotating part of the rotary electric machine. The rotor then comprises a rotor shaft configured to ensure the transmission of the mechanical power between the rotary electric machine and an exterior driven apparatus, notably the wheels of the vehicle.

In particular, it is known to have the rotor separately excited. This type of rotors is commonly referred as wound rotors or slip ring rotors. Such a rotor comprises a rotor body formed of a stack of laminations and having a plurality of teeth projecting radially, and a field coil wound around the plurality of teeth. Then, the field coil is connected to an external power supply through slip rings. The slip rings correspond to electro-mechanical devices configured to allow the exchange of electric power between the field coil, which rotates with the rotor, and the external power supply, which is fixed.

The slip rings are respectively connected to a corresponding end of the field coil through an electrical connector. DD 52 714 A1 and DE 32 48 219 A1 disclose rotors with slip rings where the slip rings are connected to a field coil through an electrical connector.

In this context, the main objective of the present invention is to provide a rotor with the electrical connector between the field coil and the slip rings, that is easier to produce.

### SUMMARY OF THE INVENTION

More precisely, the present invention concerns a rotor for a rotary electric machine according to claim 1, the rotor comprising a rotor shaft configured to rotate around an axis of rotation, a rotor body formed of a stack of laminations and being configured to be mounted coaxially on the rotor shaft, a field coil wound around the rotor body, and at least one slip ring. The at least one slip ring is mounted on the rotor shaft and is configured to exchange electric power with an external power supply, each of the at least one slip ring being configured to be electrically connected to an end of the field coil through an electrical connector. The electrical connector of the rotor has a first terminal portion configured to be connected to the corresponding slip ring, and a second terminal portion configured to be connected to the corresponding end of the field coil.

Then, the electrical connector is pre-bended such that to comprise an axial portion and a radial portion located respectively on both sides of a bend of the electrical connector. The first terminal portion is connected to an end of the axial portion of the electrical connector, the axial portion being configured to pass through an axial bore of the rotor shaft, the axial bore opening on an axial end of the rotor shaft. The second terminal portion is connected to an end of the radial portion of the electrical connector, the radial portion being configured to pass through a through bore of the rotor shaft, the through bore having an opening facing the field coil.

The present invention provides thus the substantial gain of allowing to easily set up the electrical connector within the axial bore of the rotor shaft between the at least one slip ring and the field coil. More precisely, the invention enables to shape the electrical connector prior to its insertion within the axial bore and the through bore of the rotor shaft, which facilitates the manufacturing of the rotor.

According to the invention, the rotor comprises a ring configured to ensure a radial positioning of the electrical connector, the ring having an outer diameter substantially equal to a diameter of the axial bore of the rotor shaft. The ring provides the advantage of mechanically holding the electrical connector, and easing the positioning of the electrical connector.

According to the invention, the ring comprises a cavity configured to receive the electrical connector.

According to the invention, the cavity and the electrical connector are configured such that the ring and the electrical connector form together a sealed wall within the axial bore.

Advantageously, the axial bore comprises a first portion on a side of the ring opposite to another side of the ring which opens on the axial end of the rotor shaft, the first portion of the axial bore being configured to be filled with a filling material. By dividing the axial bore in two parts thanks to sealing effect of the ring, this feature makes it possible to save some filling material, compared to a configuration in which all the axial bore is filled with the filling material.

Advantageously, the electrical connector has a substantially L-shape. Then, the axial portion and the radial portion of the electrical connector would correspond respectively to one and another one of the branches of the L-shape. The L-shape is an easy shape to manufacture.

Advantageously, the through bore is substantially directed in a radial direction or is skewed by an angle with the axis of rotation of the rotor. The shape of the electrical connector, in particular an angle between the axial portion and the radial portion, should be adapted accordingly.

Advantageously, the at least one slip ring comprises two slip rings, each of the two slip rings having a corresponding electrical connector. Then, the two electrical connectors may for instance be accommodated on two diametrically opposed locations of the rotor shaft. In particular, there could be a slight tangential angle between the two electrical connectors such that they do not hinder with each other in the mounting state.

Advantageously, the electrical connector is overmolded with an insulation material. The overmolded electrical connector allows to ensure the insulation between the rotor shaft and the electrical connector.

Advantageously, the electrical connector has a rectangular section.

Advantageously, the field coil and the electrical connector are electrically connected to one another through a hook or a fork, the fork or the hook being either on the second terminal portion of the electrical connector or on the corresponding end of the field coil.

Advantageously, the rotor body has a plurality of teeth projecting radially and slots corresponding to space between adjacent teeth of the plurality of teeth, the field coil being wound around each tooth of the plurality of teeth.

Advantageously, the rotor comprises a holder, the at least one slip ring being mounted on the holder, the holder being mounted on the rotor shaft.

The present invention also concerns a method according to claim 9 for producing the rotor as described previously, the method comprising the following successive steps:
- forming the electrical connector into a mounting state in which the electrical connector is pre-bended;
- inserting the electrical connector in the axial bore of the rotor shaft through the opening of the axial bore on the axial end of the rotor shaft;
- pushing the electrical connector by translating axially a pushing instrument from the opening of the axial bore on the axial end of the rotor shaft, such that to guide the electrical connector into a connection state in which the radial portion of the electrical connector passes through the through bore of the rotor shaft.

The use of the pushing instrument is a simple operation that may be automated, which further eases the production of the rotor, and thus reduces the related time and cost of production.

In the preferred embodiment, pushing the electrical connector comprises pushing the ring. Then, pushing the ring may consist of press-fitting the ring. For the press-fitting process, the outer diameter of the ring is slightly higher than the diameter of the axial bore of the rotor shaft. Press-fitting allows advantageously to ensure the mechanical positioning of the ring within the axial bore of the rotor shaft, and accessorily to ensure a sealing between the ring and the circumference of the axial bore.

Advantageously, inserting and pushing the electrical connector are performed in a unidirectional manner along the axis of rotation. Only back and forth movements along the axis of rotation are then needed to put the electrical connector in place. Moreover, this further helps the automation of the process of setting up the electrical connector, and thus to limit manual operations, which are generally more costly and delicate.

According to an aspect of the invention, the invention relates to the rotary electric machine comprising the rotor as described previously and a stator.

Another aspect of the invention is the electric drive, comprising the rotary electric machine and an inverter configured to convert a direct current voltage coming from a high-voltage power supply battery into an alternating current voltage so as to drive the rotary electric machine. The AC voltage may be a multiphase AC voltage, especially a three-phase voltage.

A further aspect of the invention is an electric of a hybrid vehicle, comprising the electric drive for driving the vehicle. The vehicle may comprise the high-voltage power supply battery, preferably a rechargeable battery for providing the DC voltage to the inverter, if applicable.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

The invention will be better understood on reading the description that follows, and by referring to the appended drawings given as non-limiting examples, in which identical references are given to similar objects and in which:
Figure 1 is a schematic diagram of a view of an example of a rotor according to an embodiment of the invention;
Figure 2 is a schematic diagram of a partial cut view of the example of the rotor according to an embodiment of the invention;
Figure 3 is a schematic diagram of another partial cut view of the example of the rotor according to an embodiment of the invention in a mounting state;
Figure 4 is a schematic diagram of the other partial cut view of the example of the rotor according to an embodiment of the invention in a connecting state;
Figure 5 is a schematic diagram of a view of a ring of the example of the rotor according to an embodiment of the invention;
Figure 6 is a schematic diagram of an automotive electric or hybrid vehicle comprising the rotor of a rotary electric machine according to an embodiment of the invention.

### DETAILED DESCRIPTION

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

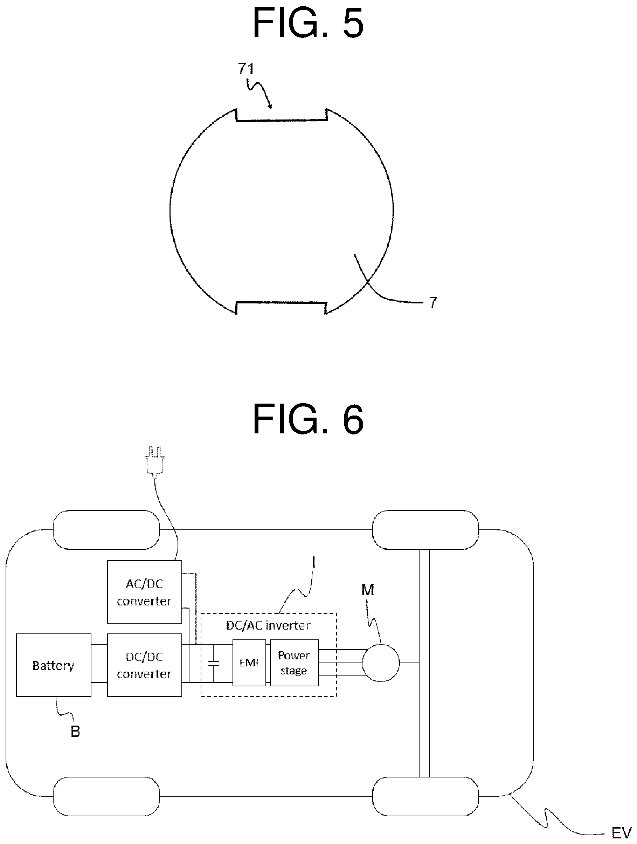

In reference to Figure 6, an aspect of the invention is an electric vehicle or a hybrid electric automotive vehicle EV comprising wheels and an electric drive configured to drive at least indirectly at least one of the wheels of the vehicle. The vehicle may comprise a high-voltage power supply battery B, preferably a rechargeable battery, for providing electric power to the electric drive. Although, the invention is not limited to this domain.

Another aspect of the invention is the electric drive comprising a rotary electric machine M and an inverter I configured to convert a direct current (DC) voltage coming from the high-voltage power supply battery B into an alternating current (AC) voltage in order to drive the rotary electric machine M. The rotary electric machine M may in particular be a three-phase rotary electric machine supplied with a three-phase AC voltage.

The invention also relates to the rotary electric machine comprising a stator, referring to a fixed part of the rotary electric machine, and a rotor, referring to a rotating part of the rotary electric machine. The rotor 1 is, in particular, a separately excited rotor, also commonly referred as a wound rotor or a slip ring rotor. More precisely, the stator presents an annular shape and surrounds coaxially the rotor. Then, the rotary electric machine comprises a casing covering both the stator and the rotor. Ordinarily, the stator comprises a stator body formed of a stack of stator laminations having a plurality of stator teeth projecting radially, and stator windings wound around the stator teeth.

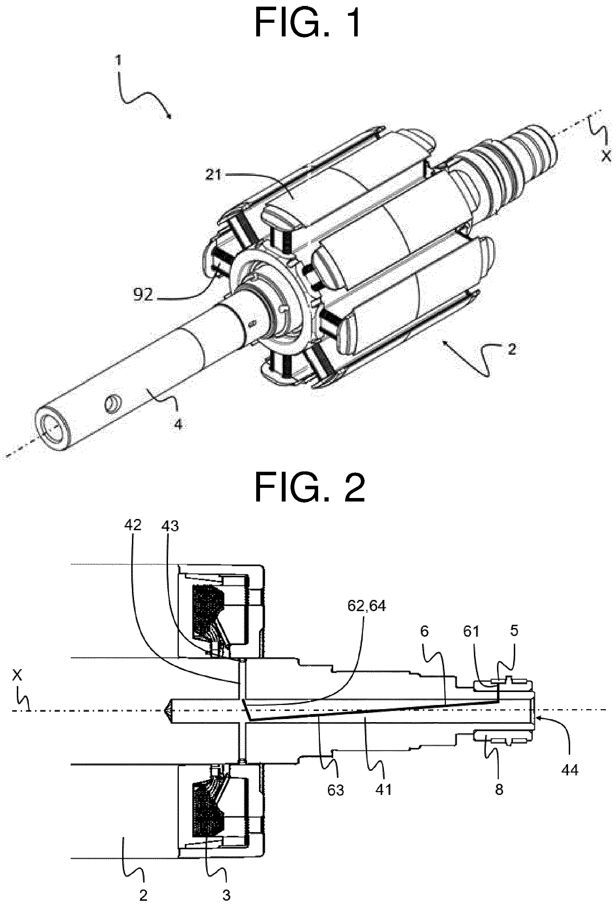

Figure 1 discloses a partial view of an example of the rotor 1 according to a further aspect of the invention. The rotor 1 comprises a rotor shaft 4 configured to rotate around an axis X of rotation, a rotor body 2 formed of a stack of laminations and being configured to be mounted coaxially on the rotor shaft 4, and a field coil 3 wound around the rotor body 2. The laminations are especially stacked along the axis of rotation. The rotor body 2 may be for instance press-fitted on the rotor shaft 4.

Figure 2 illustrates a partial cut view of an example of the rotor. More specifically, the rotor body 2 has a plurality of teeth 21 projecting radially and slots 22 corresponding to spaces between adjacent teeth of the plurality of teeth 21. The plurality of teeth 21 may notably comprise four, six, or eight teeth for example. Then, the field coil 3 is especially wound around each tooth of the plurality of teeth 21, passing through the slots 22, and forming coil ends projecting axially from respectively two axial ends of the rotor body 2.

The rotor may also present an insulation system 23 arranged on walls of the slots 22 between the rotor body 2 and the field coil 3 such that to electrically insulate the rotor body 2 from the field coil 3. More specifically, the walls of the slots 22 correspond to faces of the rotor body 2 directed towards the slots 22.

The rotor 1 may further comprise two end plates 92, as represented in Figure 1, configured to come respectively against the two axial ends of the rotor body 2. The two end plates 92 notably present an annular shape, substantially similar to the shape of the two axial ends of the rotor body 2 such that to be able to cover the two axial ends. Then, the field coil 3 advantageously passes over the two end plates 92. In other words, the two end plates 92 are located between the rotor body 2 and the coil ends of the field coil 3 such that to provide a mechanical holding of the stack of laminations and to electrically insulate axially the field coil 3 from the rotor body 2.

With reference to Figure 1, the field coil 3 is then connected to an external power supply through at least one slip ring 5 mounted on the rotor shaft 4, namely on an axial end of the rotor shaft 4. The slip rings especially correspond to electro-mechanical devices configured to allow the exchange of electric power between a rotating element and a fixed element, here respectively the field coil and the external power supply. Then, each of the at least one slip ring is configured to be electrically connected to an end of the field coil 3 through an electrical connector 6.

In particular, the rotor may have two different types of poles, respectively positive poles and negative poles, the plurality of teeth presenting an alternance of a tooth corresponding to a positive pole, and of a tooth corresponding to a negative pole. Then, the rotor has advantageously two slip rings and two corresponding electrical connectors. Each one of the two electrical connectors connect respectively the corresponding slip ring to a corresponding end of the field coil. Although, the rotor may comprise another number of slip rings, given that each one of the slip rings has a corresponding electrical connector.

In the following description, only one electrical connector will be detailed for the sake of clarity. Although, as described in a previous example, the rotor may comprise two slip rings, and thus two corresponding electrical connectors are arranged.

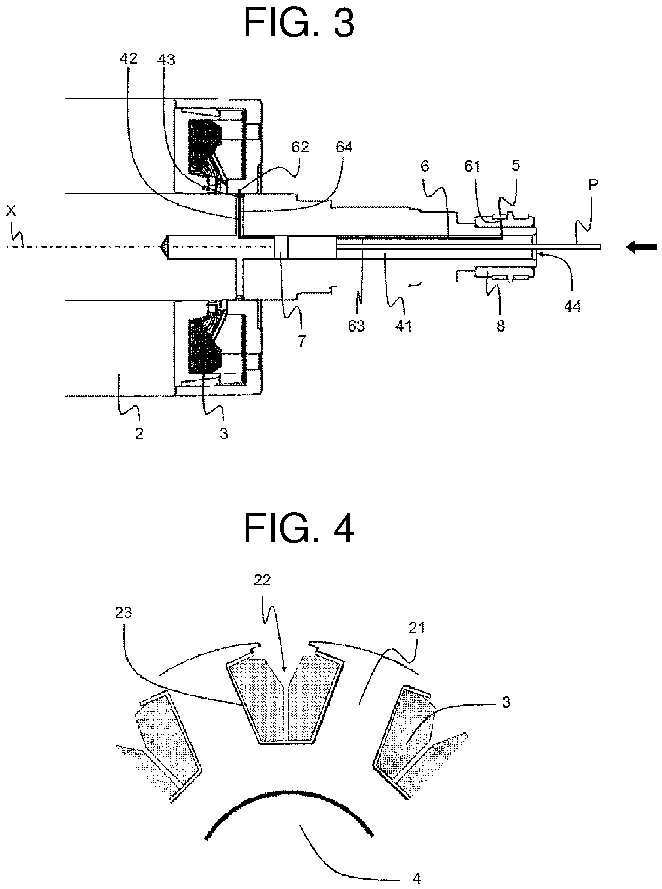

Figure 3 and 4 illustrate a partial cut view the example of the rotor according to the invention, respectively corresponding to a mounting state and to a connecting state of the electrical connector 6. It is important to note that the representation of the electrical connector is purely schematic in Figures 3 and 4.

The electrical connector 6 has a first terminal portion 61 configured to be connected to the corresponding slip ring 5, and a second terminal portion 62 configured to be connected to the corresponding end of the field coil 3. The rotor shaft 4 further has an axial bore 41 configured to be traversed by the electrical connector 6.

Then, the electrical connector 6 is pre-bended such that to comprise an axial portion 63 and a radial portion 64 respectively located on both sides of a bend 65 of the electrical connector 6. More precisely, the electrical connector 6 in the mounting state is pre-bended before being installed within the rotor. In other words, the term pre-bended especially refers to a configuration of the electrical connector before inserting and connecting the electrical connector to the field coil. It can be noted that, in the state-of-the-art technology, a conventional electrical connector configured to pass through an inner channel of the rotor shaft, would have to be shaped inside the rotor shaft during the insertion of the electrical connector. And this shaping operation involves complex manual steps. Hence, thanks to the invention, the setting up of the electrical connector is considerably simplified.

The first terminal portion 61 is connected to an end of the axial portion 63 of the electrical connector 6. The axial portion 63 is configured to pass through the axial bore 41 of the rotor shaft 4, the axial bore 41 opening on the axial end 44 of the rotor shaft 4. Hence, the electrical connector is advantageously arranged within the rotor shaft, which allows to reduce the cumbersomeness of the rotor. Moreover, doing so makes it easier to manage the positioning of the electrical connector through the service life of the rotor.

Furthermore, the second terminal portion 62 is connected to an end of the radial portion 64 of the electrical connector 6. In other words, another end of the radial portion 64 is directly connected to another end of the axial portion 63, different from the end of the axial portion 63 being connected to the first terminal portion 61. The radial portion 64 is then configured to pass through a through bore 42 of the rotor shaft 4, the through bore 42 having an opening 43 facing the field coil 3. Hence, the second terminal portion 62 of the corresponding electrical connector 6 may be electrically connected to the corresponding end of the field coil 3.

The invention also concerns a method for producing the rotor as described previously, the method comprising the following successive steps:
- forming the electrical connector 6 into the mounting state in which the electrical connector 6 is pre-bended;
- inserting the electrical connector 6 in the axial bore 41 of the rotor shaft 4 through the opening of the axial bore 41 on the axial end 44 of the rotor shaft 4, as illustrated in Figure 3;
- pushing the electrical connector 6 by translating axially a pushing instrument P from the opening of the axial bore 41 on the axial end 44 of the rotor shaft 4, such that to guide the electrical connector 6 into the connection state in which the radial portion 64 of the electrical connector 6 passes through the through bore 42 of the rotor shaft 4, as illustrated in Figure 4.

The present invention provides thus the substantial gain of allowing to easily set up the electrical connector within the axial bore of the rotor shaft, the electrical connector electrically connecting the at least one slip ring and the field coil together. More precisely, the invention enables to shape the electrical connector prior to its insertion within the axial bore and the through bore of the rotor shaft, which facilitates the manufacturing of the rotor. Moreover, the use of the pushing instrument is a simple operation that may be automated, which further eases the production of the rotor, and thus reduces the related time and cost of production.

In addition, inserting and pushing the electrical connector 6 may be performed in a unidirectional manner along the axis X of rotation. Only back and forth movements along the axis of rotation are then needed to put the electrical connector in place. Moreover, this further helps the automation of the process of setting up the electrical connector, and thus to limit manual operations, which are generally more costly and delicate.

According to the invention, with reference to Figure 4, the rotor 1 comprises a ring 7 configured to ensure a radial positioning of the electrical connector 6. The ring 7 has an outer diameter substantially equal to a diameter of the axial bore 41 of the rotor shaft 4. The ring 7 provides the advantage of mechanically holding the electrical connector 6, and easing the positioning of the electrical connector 6.

Then, in the preferred embodiment, pushing the electrical connector 6 may comprise pushing the ring 7. More specifically, the pushing instrument P pushes against the ring 7, and in return, the ring 7 moves the electrical connector 6 towards the connecting state. Hence, while the ring 7 is pushed within the axial bore of the rotor shaft, the ring 7 applies a force onto the electrical connector 6, and more precisely on the axial portion of the electrical connector 6, so that to push the electrical connector radially towards the circumference of the axial bore of the rotor shaft. Then, along with pushing the ring 7, the electrical connector 6 progressively moves until the radial portion 64 of the electrical connector 6 goes into and through the through bore 42 of the rotor shaft 4.

Furthermore, pushing the ring 7 may consist of press-fitting the ring. For the press-fitting process, the outer diameter of the ring is slightly higher than the diameter of the axial bore of the rotor shaft. Press-fitting allows advantageously to ensure the mechanical positioning of the ring 7 within the axial bore of the rotor shaft, and accessorily to ensure a sealing between the ring 7 and the circumference of the axial bore 41.

Figure 5 discloses a schematic diagram of an example of the ring 7. The ring 7 comprises a cavity 71 configured to receive the electrical connector 6. The cavity 71 and the electrical connector 6 are configured such that the ring 7 and the electrical connector 6 form together a sealed wall within the axial bore 41. Especially, the shapes of the electrical connector 6 and of the cavity 71 of the ring 7 may be complementary. The example of the ring 7 represented in Figure 5 comprises two cavities, such that to receive two electrical connectors 6 as presented in a previous example.

Moreover, the axial bore of the rotor shaft may also be machined to provide a complementary shape to the electrical connector 6, for an improved sealing of the sealed wall formed by the ring 7 together with the electrical connector.

With reference to Figure 4, the axial bore 41 preferably comprises a first portion on a side of the ring 7 opposite to another side of the ring 7 opening on the axial end 44 of the rotor shaft 4. The first portion of the axial bore 41 is configured to be filled with a filling material, for instance a resin. It is usual to fill the rotor shaft 4 with resin. In this context, by shortening the region to be filled with resin thanks to sealing effect of the ring, this feature makes it possible to save some filling material, compared to a configuration in which all the axial bore is filled with the filling material.

Besides, the electrical connector may effectively present a substantially L-shape. Then, the axial portion and the radial portion of the electrical connector would correspond respectively to one and another one of the branches of the L-shape. The L-shape is an easy shape to manufacture.

It can be noted that the through bore 42 may be substantially directed in a radial direction, but not necessarily. In fact, the through bore 42 may also be skewed and thus may present an angle with the axis of rotation of the rotor, if appropriate. The shape of the electrical connector, in particular an angle between the axial portion and the radial portion, should be adapted accordingly.

The electrical connector 6 may advantageously be overmolded with an insulation material. The overmolded electrical connector allows to ensure the insulation between the rotor shaft and the electrical connector. Alternatively, other insulation means may be arranged either surrounding the electrical connector or within the axial bore and the through bore of the rotor shaft for the electrical insulation between the electrical connector and the rotor shaft.

The electrical connector may have a rectangular section, namely the electrical connector is a flat conductor. Such a rectangular section especially eases the setting up of complementary shapes between the ring and the electrical connector. Then, the ring may guide the electrical connector 6 bot radially and tangentially thanks to lateral walls of the cavity that stop tangential movements of the electrical connector.

The electrical connector is advantageously made out of a material comprising copper.

In addition, the field coil 3 and the electrical connector 6 may advantageously be electrically connected to one another using a connection system that does not necessarily require welding, for instance through a hook or a fork. The fork or the hook may either be on the second terminal portion 62 of the electrical connector 6 or on the corresponding end of the field coil 3. Then, the other one of the second terminal portion 62 of the electrical connector 6 or of the field coil 3 is capable of being electrically connected to the fork or the hook without having to be weld together. Doing so eases the connection of the electrical connector to the corresponding end of the field coil. Although, the connection between the field coil and the electrical connector may be further secured with a weld.

In a previously described example with two slip rings and two corresponding electrical connectors, the two electrical connectors may for instance be accommodated on two diametrically opposed locations of the rotor shaft. In particular, there could be a slight tangential angle between the two electrical connectors such that they do not hinder with each other in the mounting state.

Besides, as illustrates in Figures 1, 3, and 4 the rotor 1 may comprise a holder 8, the at least one slip ring 5 being mounted on the holder 8, the holder 8 being mounted on the rotor shaft 4. In other words, the at least one slip ring 5 is mounted on the rotor shaft 4 through the holder 8. The use of the holder, allows to have a standardized sub-assembly comprising the holder and the slip rings, which is easier to mount on the rotor shaft, and allows at a same time to ensure the electrical insulation between the slip rings and the rotor shaft. The at least one slip ring 5, the holder 8, and the electrical connector 6 may notably be mounted together into a sub-assembly before mounting the sub-assembly by inserting the electrical connector 6 within the axial bore 41 of the rotor shaft 4, and mounting the holder 8 on the rotor shaft 4.

Although embodiments have been described with reference to a number of illustrative embodiments thereof, it should be understood that numerous other modifications and embodiments can be devised by those skilled in the art that will fall within the scope of the invention as defined by the appended claims.

## Claims

1. A rotor (1) for a rotary electric machine (M), the rotor (1) comprising:
- a rotor shaft (4) configured to rotate around an axis (X) of rotation;
- a rotor body (2) formed of a stack of laminations and being configured to be mounted coaxially on the rotor shaft (4);
- a field coil (3) wound around the rotor body (2);
- at least one slip ring (5) mounted on the rotor shaft (4) and configured to exchange electric power with an external power supply, each of the at least one slip ring (5) being configured to be electrically connected to an end of the field coil (3) through an electrical connector (6);
- the electrical connector (6) having a first terminal portion (61) configured to be connected to the corresponding slip ring (5), and a second terminal portion (62) configured to be connected to the corresponding end of the field coil (3);
wherein the electrical connector (6) is pre-bended such that to comprise an axial portion (63) and a radial portion (64) respectively located on both sides of a bend (65) of the electrical connector (6),
the first terminal portion (61) being connected to an end of the axial portion (63) of the electrical connector (6), the axial portion (63) being configured to pass through an axial bore (41) of the rotor shaft (4), the axial bore (41) opening on an axial end (44) of the rotor shaft (4),
the second terminal portion (62) being connected to an end of the radial portion (64) of the electrical connector (6), the radial portion (64) being configured to pass through a through bore (42) of the rotor shaft (4), the through bore (42) having an opening (43) facing the field coil (3),
wherein the rotor (1) comprises a ring (7) configured to ensure a radial positioning of the electrical connector (6), the ring (7) having an outer diameter substantially equal to a diameter of the axial bore (41) of the rotor shaft (4)
wherein the ring (7) comprises a cavity (71) configured to receive the electrical connector (6),
**characterized in that** the cavity (71) and the electrical connector (6) are configured such that the ring (7) and the electrical connector (6) form together a sealed wall within the axial bore (41).

2. The rotor (1) as claimed in claim 1, wherein the axial bore (41) comprises a first portion on a side of the ring (7) opposite to another side of the ring (7) which opens or the axial end (44) of the rotor shaft (4), the first portion of the axial bore (41) being configured to be filled with a filling material.

3. The rotor (1) as claimed in any of the preceding claims, wherein the at least one slip ring (5) comprises two slip rings, each of the two slip rings having a corresponding electrical connector (6).

4. The rotor (1) as claimed in any of the preceding claims, wherein the electrical connector (6) is overmolded with an insulation material.

5. The rotor (1) as claimed in any of the preceding claims, wherein the electrical connector (6) has a rectangular section.

6. The rotor (1) as claimed in any of the preceding claims, wherein the field coil (3) and the electrical connector (6) are electrically connected to one another through a hook or a fork, the fork or the hook being either on the second terminal portion (62) of the electrical connector (6) or on the corresponding end of the field coil (3).

7. The rotor (1) as claimed in any of the preceding claims, wherein the rotor body (2) has a plurality of teeth (21) projecting radially and slots (22) corresponding to space between adjacent teeth of the plurality of teeth (21), the field coil (3) being wound around each tooth of the plurality of teeth (21).

8. The rotor (1) as claimed in any of the preceding claims, wherein the rotor (1) comprises a holder (8), the at least one slip ring (5) being mounted on the holder (8), the holder (8) being mounted on the rotor shaft (4).

9. A method for producing the rotor (1) as claimed in any of the preceding claims, the method comprising the following successive steps:
- forming the electrical connector (6) into a mounting state in which the electrical connector (6) is pre-bended;
- inserting the electrical connector (6) in the axial bore (41) of the rotor shaft (4) through the opening of the axial bore (41) on the axial end (44) of the rotor shaft (4);
- pushing the electrical connector (6) by translating axially a pushing instrument (P) from the opening of the axial bore (41) on the axial end (44) of the rotor shaft (4), such that to guide the electrical connector (6) into a connection state in which the radial portion (64) of the electrical connector (6) passes through the through bore (42) of the rotor shaft (4).

10. The method as claimed in the previous claim, wherein pushing the electrical connector (6) comprises pushing the ring (7).

11. The method as claimed in any of the claims 9 to 10, wherein inserting and pushing the electrical connector (6) is performed in a unidirectional manner along the axis (X) of rotation.

12. A rotary electric machine (M) for an electric or a hybrid vehicle (EV), the rotary electric machine (M) comprising the rotor (1) according to any of the claims 1 to 8.

## Patentansprüche

1. Ein Rotor (1) für eine rotierende elektrische Maschine (M), wobei der Rotor (1) umfasst:
- eine Rotorwelle (4), die konfiguriert ist, um eine Rotationsachse (X) zu rotieren;
- einen Rotorkörper (2), der aus einem Stapel von Laminierungen gebildet ist und konfiguriert ist, koaxial auf der Rotorwelle (4) montiert zu werden;
- eine Feldspule (3), die um den Rotorkörper (2) gewickelt ist;
- mindestens einen Schleifring (5), der auf der Rotorwelle (4) montiert ist und konfiguriert ist, elektrische Leistung mit einer externen Stromversorgung auszutauschen, wobei jeder der mindestens einen Schleifringe (5) konfiguriert ist, über einen elektrischen Verbinder (6) mit einem Ende der Feldspule (3) elektrisch verbunden zu werden;
- wobei der elektrische Verbinder (6) einen ersten Anschlussabschnitt (61), der konfiguriert ist, mit dem entsprechenden Schleifring (5) verbunden zu werden, und einen zweiten Anschlussabschnitt (62) aufweist, der konfiguriert ist, mit dem entsprechenden Ende der Feldspule (3) verbunden zu werden;
- wobei der elektrische Verbinder (6) vorgebogen ist, sodass er einen axialen Abschnitt (63) und einen radialen Abschnitt (64) umfasst, die sich jeweils auf beiden Seiten einer Biegung (65) des elektrischen Verbinders (6) befinden,
- wobei der erste Anschlussabschnitt (61) mit einem Ende des axialen Abschnitts (63) des elektrischen Verbinders (6) verbunden ist, wobei der axiale Abschnitt (63) konfiguriert ist, durch eine axiale Bohrung (41) der Rotorwelle (4) zu verlaufen, wobei die axiale Bohrung (41) an einem axialen Ende (44) der Rotorwelle (4) mündet,
- wobei der zweite Anschlussabschnitt (62) mit einem Ende des radialen Abschnitts (64) des elektrischen Verbinders (6) verbunden ist, wobei der radiale Abschnitt (64) konfiguriert ist, durch eine Durchgangsbohrung (42) der Rotorwelle (4) zu verlaufen, wobei die Durchgangsbohrung (42) eine Öffnung (43) aufweist, die der Feldspule (3) zugewandt ist,
- wobei der Rotor (1) einen Ring (7) umfasst, der konfiguriert ist, eine radiale Positionierung des elektrischen Verbinders (6) zu gewährleisten, wobei der Ring (7) einen Außendurchmesser aufweist, der im Wesentlichen gleich einem Durchmesser der axialen Bohrung (41) der Rotorwelle (4) ist,
- wobei der Ring (7) einen Hohlraum (71) umfasst, der konfiguriert ist, den elektrischen Verbinder (6) aufzunehmen, **dadurch gekennzeichnet, dass** der Hohlraum (71) und der elektrische Verbinder (6) so konfiguriert sind, dass der Ring (7) und der elektrische Verbinder (6) zusammen eine abgedichtete Wand innerhalb der axialen Bohrung (41) bilden.

2. Der Rotor (1) nach Anspruch 1, wobei die axiale Bohrung (41) einen ersten Abschnitt auf einer Seite des Rings (7) umfasst, die der anderen Seite des Rings (7) gegenüberliegt, die sich zum axialen Ende (44) der Rotorwelle (4) öffnet, wobei der erste Abschnitt der axialen Bohrung (41) konfiguriert ist, mit einem Füllmaterial gefüllt zu werden.

3. Der Rotor (1) nach einem der vorhergehenden Ansprüche, wobei der mindestens eine Schleifring (5) zwei Schleifringe umfasst, wobei jeder der zwei Schleifringe einen entsprechenden elektrischen Verbinder (6) aufweist.

4. Der Rotor (1) nach einem der vorhergehenden Ansprüche, wobei der elektrische Verbinder (6) mit einem Isolationsmaterial umspritzt ist.

5. Der Rotor (1) nach einem der vorhergehenden Ansprüche, wobei der elektrische Verbinder (6) einen rechteckigen Querschnitt aufweist.

6. Der Rotor (1) nach einem der vorhergehenden Ansprüche, wobei die Feldspule (3) und der elektrische Verbinder (6) über einen Haken oder eine Gabel elektrisch miteinander verbunden sind, wobei die Gabel oder der Haken entweder am zweiten Anschlussabschnitt (62) des elektrischen Verbinders (6) oder am entsprechenden Ende der Feldspule (3) angeordnet ist.

7. Der Rotor (1) nach einem der vorhergehenden Ansprüche, wobei der Rotorkörper (2) eine Vielzahl von Zähnen (21), die radial hervorstehen, und Nuten (22) aufweist, die dem Raum zwischen benachbarten Zähnen der Vielzahl von Zähnen (21) entsprechen, wobei die Feldspule (3) um jeden Zahn der Vielzahl von Zähnen (21) gewickelt ist.

8. Der Rotor (1) nach einem der vorhergehenden Ansprüche, wobei der Rotor (1) einen Halter (8) umfasst, wobei der mindestens eine Schleifring (5) auf dem Halter (8) montiert ist, wobei der Halter (8) auf der Rotorwelle (4) montiert ist.

9. Ein Verfahren zur Herstellung des Rotors (1) nach einem der vorhergehenden Ansprüche, wobei das Verfahren die folgenden aufeinanderfolgenden Schritte umfasst:
- Formen des elektrischen Verbinders (6) in einen Montagezustand, in dem der elektrische Verbinder (6) vorgebogen ist;
- Einführen des elektrischen Verbinders (6) in die axiale Bohrung (41) der Rotorwelle (4) durch die Öffnung der axialen Bohrung (41) am axialen Ende (44) der Rotorwelle (4);
- Schieben des elektrischen Verbinders (6) durch axiales Verschieben eines Schieberinstruments (P) von der Öffnung der axialen Bohrung (41) am axialen Ende (44) der Rotorwelle (4), um den elektrischen Verbinder (6) in einen Verbindungszustand zu führen, in dem der radiale Abschnitt (64) des elektrischen Verbinders (6) durch die Durchgangsbohrung (42) der Rotorwelle (4) verläuft.

10. Das Verfahren nach dem vorhergehenden Anspruch, wobei das Schieben des elektrischen Verbinders (6) das Schieben des Rings (7) umfasst.

11. Das Verfahren nach einem der Ansprüche 9 bis 10, wobei das Einführen und Schieben des elektrischen Verbinders (6) in einer unidirektionalen Weise entlang der Rotationsachse (X) durchgeführt wird.

12. Eine rotierende elektrische Maschine (M) für ein elektrisches oder ein Hybridfahrzeug (EV), wobei die rotierende elektrische Maschine (M) den Rotor (1) nach einem der Ansprüche 1 bis 8 umfasst.

## Revendications

1. Un rotor (1) pour une machine électrique rotative (M), le rotor (1) comprenant :
- un arbre de rotor (4) configuré pour tourner autour d'un axe (X) de rotation ;
- un corps de rotor (2) formé d'un empilement de tôles et étant configuré pour être monté coaxialement sur l'arbre de rotor (4) ;
- une bobine de champ (3) enroulée autour du corps de rotor (2) ;
- au moins une bague collectrice (5) montée sur l'arbre de rotor (4) et configurée pour échanger de l'énergie électrique avec une alimentation externe, chacune des au moins une bague collectrice (5) étant configurée pour être électriquement connectée à une extrémité de la bobine de champ (3) par l'intermédiaire d'un connecteur électrique (6) ;
- le connecteur électrique (6) ayant une première partie terminale (61) configurée pour être connectée à la bague collectrice (5) correspondante, et une seconde partie terminale (62) configurée pour être connectée à l'extrémité correspondante de la bobine de champ (3) ;
- dans lequel le connecteur électrique (6) est pré-plié de manière à comprendre une partie axiale (63) et une partie radiale (64) respectivement situées de part et d'autre d'un coude (65) du connecteur électrique (6),
- la première partie terminale (61) étant connectée à une extrémité de la partie axiale (63) du connecteur électrique (6), la partie axiale (63) étant configurée pour passer à travers un alésage axial (41) de l'arbre de rotor (4), l'alésage axial (41) s'ouvrant sur une extrémité axiale (44) de l'arbre de rotor (4),
- la seconde partie terminale (62) étant connectée à une extrémité de la partie radiale (64) du connecteur électrique (6), la partie radiale (64) étant configurée pour passer à travers un alésage traversant (42) de l'arbre de rotor (4), l'alésage traversant (42) ayant une ouverture (43) faisant face à la bobine de champ (3),
- dans lequel le rotor (1) comprend une bague (7) configurée pour assurer un positionnement radial du connecteur électrique (6), la bague (7) ayant un diamètre extérieur sensiblement égal à un diamètre de l'alésage axial (41) de l'arbre de rotor (4)
- dans lequel la bague (7) comprend une cavité (71) configurée pour recevoir le connecteur électrique (6), **caractérisé en ce que** la cavité (71) et le connecteur électrique (6) sont configurés de telle sorte que la bague (7) et le connecteur électrique (6) forment ensemble une paroi étanche à l'intérieur de l'alésage axial (41).

2. Le rotor (1) selon la revendication 1, dans lequel l'alésage axial (41) comprend une première partie sur un côté de la bague (7) opposé à un autre côté de la bague (7) qui s'ouvre sur l'extrémité axiale (44) de l'arbre de rotor (4), la première partie de l'alésage axial (41) étant configurée pour être remplie d'un matériau de remplissage.

3. Le rotor (1) selon l'une quelconque des revendications précédentes, dans lequel l'au moins une bague collectrice (5) comprend deux bagues collectrices, chacune des deux bagues collectrices ayant un connecteur électrique (6) correspondant.

4. Le rotor (1) selon l'une quelconque des revendications précédentes, dans lequel le connecteur électrique (6) est surmoulé avec un matériau isolant.

5. Le rotor (1) selon l'une quelconque des revendications précédentes, dans lequel le connecteur électrique (6) a une section rectangulaire.

6. Le rotor (1) selon l'une quelconque des revendications précédentes, dans lequel la bobine de champ (3) et le connecteur électrique (6) sont électriquement connectés l'un à l'autre par l'intermédiaire d'un crochet ou d'une fourche, la fourche ou le crochet étant soit sur la seconde partie terminale (62) du connecteur électrique (6), soit sur l'extrémité correspondante de la bobine de champ (3).

7. Le rotor (1) selon l'une quelconque des revendications précédentes, dans lequel le corps de rotor (2) a une pluralité de dents (21) se projetant radialement et des encoches (22) correspondant à l'espace entre des dents adjacentes de la pluralité de dents (21), la bobine de champ (3) étant enroulée autour de chaque dent de la pluralité de dents (21).

8. Le rotor (1) selon l'une quelconque des revendications précédentes, dans lequel le rotor (1) comprend un support (8), l'au moins une bague collectrice (5) étant montée sur le support (8), le support (8) étant monté sur l'arbre de rotor (4).

9. Un procédé de fabrication du rotor (1) selon l'une quelconque des revendications précédentes, le procédé comprenant les étapes successives suivantes :
- former le connecteur électrique (6) dans un état de montage dans lequel le connecteur électrique (6) est pré-plié ;
- insérer le connecteur électrique (6) dans l'alésage axial (41) de l'arbre de rotor (4) à travers l'ouverture de l'alésage axial (41) sur l'extrémité axiale (44) de l'arbre de rotor (4) ;
- pousser le connecteur électrique (6) en translatant axialement un instrument de poussée (P) depuis l'ouverture de l'alésage axial (41) sur l'extrémité axiale (44) de l'arbre de rotor (4), de manière à guider le connecteur électrique (6) dans un état de connexion dans lequel la partie radiale (64) du connecteur électrique (6) passe à travers l'alésage traversant (42) de l'arbre de rotor (4).

10. Le procédé selon la revendication précédente, dans lequel pousser le connecteur électrique (6) comprend pousser la bague (7).

11. Le procédé selon l'une quelconque des revendications 9 à 10, dans lequel l'insertion et la poussée du connecteur électrique (6) sont effectuées de manière unidirectionnelle le long de l'axe (X) de rotation.

12. Une machine électrique rotative (M) pour un véhicule électrique ou hybride (EV), la machine électrique rotative (M) comprenant le rotor (1) selon l'une quelconque des revendications 1 à 8.
